(19) Europäisches Patentamt European Patent Office Office européen des brevets

(11) EP 4 535 385 A1

(12) EUROPEAN PATENT APPLICATION

(43) Date of publication:
09.04.2025 Bulletin 2025/15

(21) Application number: 24195892.5

(22) Date of filing: 22.08.2024

(51) International Patent Classification (IPC):
H01G 4/30 (2006.01)      H01G 4/12 (2006.01)
H01G 4/224 (2006.01)     H01G 4/012 (2006.01)

(52) Cooperative Patent Classification (CPC):
H01G 4/30; H01G 4/12; H01G 4/224; H01G 4/012;
H01G 4/1227

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.10.2023 KR 20230132660

(71) Applicant: Samsung Electro-Mechanics Co., Ltd.
Suwon-si, Gyeonggi-do (KR)

(72) Inventors:
• Kang, Seung Min
  Suwon-si, Gyeonggi-do (KR)
• Lee, Dae Hee
  Suwon-si, Gyeonggi-do (KR)
• Hwang, Sun Ju
  Suwon-si, Gyeonggi-do (KR)
• Yang, Chan Ho
  Suwon-si, Gyeonggi-do (KR)

(74) Representative: Grünecker Patent- und
Rechtsanwälte
PartG mbB
Leopoldstraße 4
80802 München (DE)

(54) MULTILAYER ELECTRONIC COMPONENT

(57) A multilayer electronic component includes a body having first and second surfaces opposing each other in a first direction, third and fourth surfaces opposing each other in a second direction, and fifth and sixth surfaces opposing each other in a third direction, the body including a capacitance formation portion including a dielectric layer and an internal electrode, and a cover portion, and an external electrode. When maximum sizes of the multilayer electronic component in the first to third directions are L, W and T, respectively, average sizes of the cover portion, dielectric layer, and internal electrode in the first direction are tc, td, and te, respectively, 0.75 mm $\leq$ L $\leq$ 1.25 mm, 0.25 mm $\leq$ W $\leq$ 0.75 mm, T < 0.5 mm, 28 um $\leq$ tc $\leq$ 34 $\mu$m, 0.4 $\mu$m $\leq$ td $\leq$ 0.5 $\mu$m, and 0.4 $\mu$m $\leq$ te $\leq$ 0.5 $\mu$m are satisfied.

FIG. 3

# Description

## CROSS-REFERENCE TO RELATED APPLICATION(S)

This application claims the benefit of priority to Korean Patent Application No. 10-2023-0132660 filed on October 5, 2023 in the Korean Intellectual Property Office, the disclosure of which is incorporated herein by reference in its entirety.

## TECHNICAL FIELD

The present disclosure relates to a multilayer electronic component.

## BACKGROUND

A multilayer ceramic capacitor (MLCC), a multilayer electronic component, is a chip-type condenser mounted on the printed circuit boards of various types of electronic products such as imaging devices, including a liquid crystal display (LCD) and a plasma display panel (PDP), computers, smartphones, and mobile phones, and serves to charge or discharge electricity therein or therefrom. The multilayer ceramic capacitor may be used as a component of various electronic devices due to having a small size, ensuring high capacitance and being easily mounted.

In accordance with the demand for miniaturization and implementation of high capacitance of ceramic capacitors, research has been conducted to reduce a size of an MLCC while increasing capacitance of the MLCC.

A size of a generally used MLCC may be 1005 (length: about 1.0 mm, width: about 0.5 mm), and an MLCC having a size of 1005 may be mainly mounted in small IT products. Currently, an MLCC having a size of 1005 generally has a thickness of about 0.5 mm, but the thickness has been increased to 0.65 mm to 0.75 mm to implement effective capacitance required by customers. However, as an electronic component in which an MLCC is mounted is miniaturized, it is necessary to control a thickness of the MLCC to be less than 0.5 mm.

However, as an MLCC has a small size, it may be more vulnerable to chipping or cracks occurring in an edge of a body of the MLCC. When such chipping or cracks occurs in the body of the MLCC, the MLCC may have reduced reliability due to permeation of a plating solution or external moisture.

Accordingly, there is a need for research into a design structure of an MLCC capable of miniaturizing the MLCC while preventing occurrence of chipping and cracks to ensure reliability and implement capacitance required by customers.

## SUMMARY

An aspect of the present disclosure provides a multilayer electronic component having excellent capacitance per unit volume and reliability.

However, the aspects of the present disclosure are not limited to those set forth herein, and will be more easily understood in the course of describing specific example embodiments of the present disclosure.

According to an aspect of the present disclosure, there is provided a multilayer electronic component including a body having a first surface and a second surface opposing each other in a first direction, a third surface and a fourth surface connected to the first surface and the second surface and opposing each other in a second direction, and a fifth surface and a sixth surface connected to the first to fourth surfaces and opposing each other in a third direction, the body including a capacitance formation portion including a dielectric layer and an internal electrode disposed alternately with the dielectric layer in the first direction, and a cover portion disposed on both surfaces of the capacitance formation portion in the first direction, and an external electrode disposed on the third surface and the fourth surface. When a maximum size of the multilayer electronic component in the second direction is L, a maximum size of the multilayer electronic component in the third direction is W, a maximum size of the multilayer electronic component in the first direction is T, an average size of the cover portion in the first direction is tc, an average size of the dielectric layer in the first direction is td, and an average size of the internal electrode in the first direction is te, 0.75 mm $\leq$ L $\leq$ 1.25 mm, 0.25 mm $\leq$ W $\leq$ 0.75 mm, T < 0.5 mm, 28 um $\leq$ tc $\leq$ 34 $\mu$m, 0.4 um $\leq$ td $\leq$ 0.5 um, and 0.4 $\mu$m $\leq$ te $\leq$ 0.5 $\mu$m may be satisfied.

According to an aspect of the present disclosure, there is provided a multilayer electronic component including a body including a capacitance formation portion including a dielectric layer and internal electrodes disposed alternately with the dielectric layer in a thickness direction, and a cover portion disposed on opposing surfaces of the capacitance formation portion in the thickness direction, side margin portions disposed on width-wise opposing surfaces and external electrodes disposed on length-wise opposing surfaces, wherein a thickness T of the multilayer electronic component, an average size of the cover portion in the thickness direction tc, and an average size of the side margin portion in the width direction wm satisfying the following relationships: 0.056 $\leq$ tc/T $\leq$ 0.67, and 0.028 $\leq$ wm/T $\leq$ 0.38.

According to example embodiments of the present disclosure, a multilayer electronic component may have excellent capacitance per unit volume and reliability.

## BRIEF DESCRIPTION OF DRAWINGS

The above and other aspects, features, and advantages of the present disclosure will be more clearly understood from the following detailed description, taken in conjunction with the accompanying drawings, in which:

FIG. 1 is a schematic perspective view of a multilayer electronic component according to an example embodiment of the present disclosure;
FIG. 2 is a schematic exploded perspective view of a body and a side margin portion of FIG. 1;
FIG. 3 is a schematic cross-sectional view taken along line I-I' of FIG. 1;
FIG. 4 is a schematic cross-sectional view taken along line II-II' of FIG. 1; and
FIGS. 5 to 7 are schematic perspective views of a method of manufacturing a multilayer electronic component according to an example embodiment of the present disclosure.

## DETAILED DESCRIPTION

Hereinafter, example embodiments of the present disclosure are described with reference to the accompanying drawings. The present disclosure may, however, be exemplified in many different forms and should not be construed as being limited to the specific example embodiments set forth herein. In addition, example embodiments of the present disclosure may be provided for a more complete description of the present disclosure to those skilled in the art. Accordingly, the shapes and sizes of the elements in the drawings may be exaggerated for clarity of description, and elements denoted by the same reference numerals in the drawings may be the same elements.

In order to clearly illustrate the present disclosure, portions not related to the description are omitted, and sizes and thicknesses are magnified in order to clearly represent layers and regions, and similar portions having the same functions within the same scope are denoted by similar reference numerals throughout the specification. Throughout the specification, when an element is referred to as "comprising" or "including," it means that it may include other elements as well, rather than excluding other elements, unless specifically stated otherwise.

In the drawings, a first direction may be defined as a thickness (T) direction, a second direction may be defined as a length (L) direction, and a third direction may be defined as a width (W) direction.

Multilayer Electronic Component

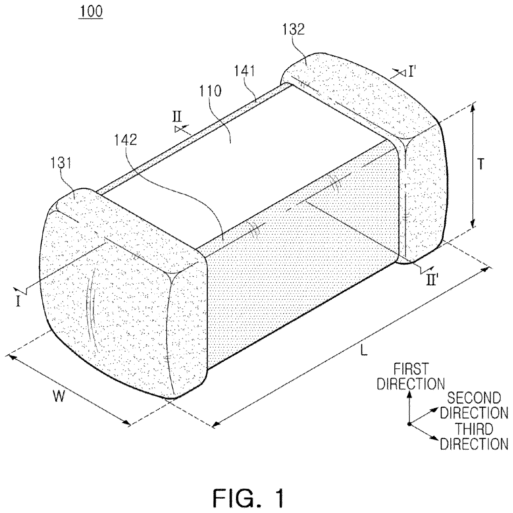

FIG. 1 is a schematic perspective view of a multilayer electronic component according to an example embodiment of the present disclosure.

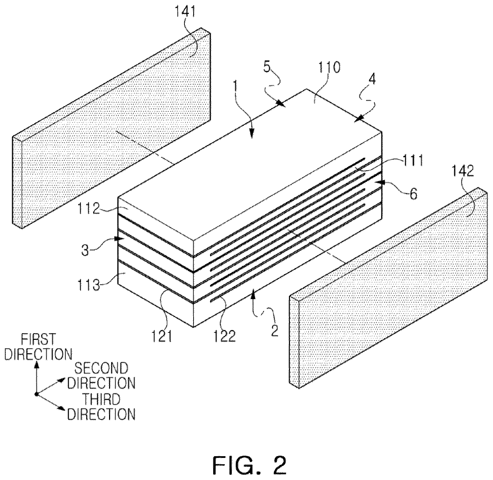

FIG. 2 is a schematic exploded perspective view of a body and a side margin portion of FIG. 1.

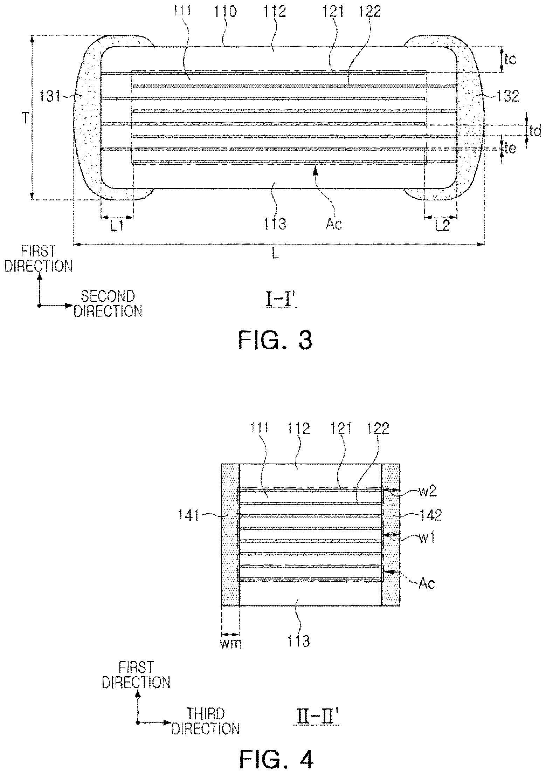

FIG. 3 is a schematic cross-sectional view taken along line I-I' of FIG. 1.

FIG. 4 is a schematic cross-sectional view taken along line II-II' of FIG. 1.

Hereinafter, a multilayer electronic component 100 according to an example embodiment of the present disclosure will be described in detail with reference to FIGS. 1 to 4. In addition, a multilayer ceramic capacitor (hereinafter referred to as "MLCC") is described as an example of the multilayer electronic component, but the present disclosure is not limited thereto, and may be applied to various electronic products, such as inductors, piezoelectric elements, varistors, thermistors, or the like.

A multilayer electronic component 100 according to an example embodiment of the present disclosure may have a size of 1005 (length: 1.0 mm $\pm$ 0.25 mm, width: 0.5 mm $\pm$ 0.25 mm). That is, when a maximum size of the multilayer electronic component 100 in a second direction is L and a maximum size of the multilayer electronic component 100 in a third direction is W, 0.75mm$\leq$L$\leq$1.25mm and 0.25mm$\leq$W$\leq$0.75mm may be satisfied. Depending on the accuracy of a manufacturing process, 0.85mm$\leq$L$\leq$1.15mm and 0.35mm$\leq$W$\leq$0.65mm may be satisfied, but the present disclosure is not limited thereto.

The multilayer electronic component 100 may include a body 110 including a dielectric layer 111 and internal electrodes 121 and 122, and external electrodes 131 and 132.

A specific shape of the body 110 is not particularly limited. However, as illustrated, the body 110 may have a hexahedral shape or a shape similar thereto. During a sintering process, ceramic powder particles, included in the body 110, may shrink or an edge portion of the body 110 may be polished, such that the body 110 may not have a hexahedral shape having perfectly straight lines, but may have a substantially hexahedral shape.

The body 110 may have first and second surfaces 1 and 2 opposing each other in a first direction, third and fourth surfaces 3 and 4 connected to the first and second surfaces 1 and 2, the third and fourth surfaces 3 and 4 opposing each other in the second direction, and fifth and sixth surfaces 5 and 6 connected to the first to fourth surfaces 1, 2, 3, and 4, the fifth and sixth surfaces 5 and 6 opposing each other in the third direction.

The body 110 may include a dielectric layer 111 and internal electrodes 121 and 122 disposed alternately with the dielectric layer 111. A plurality of dielectric layers 111, included in the body 110, may be in a sintered state, and adjacent dielectric layers 111 may be integrated with each other such that boundaries therebetween are not readily apparent without using a scanning electron microscope (SEM).

The dielectric layer 111 may include, for example, a perovskite-type compound represented by $ABO_3$, as a main component. The perovskite-type compound, represented by $ABO_3$, may be, for example, $BaTiO_3$, $(Ba_{1-x}Ca_x)TiO_3$ (0<x<1), $Ba(Ti_{1-y}Ca_y)O_3$ (0<y<1), $(Ba_{1-x}Ca_x)(Ti_{1-y}Zr_y)O_3$ (0<x<1, 0<y<1), or $Ba(Ti_{1-y}Zr_y)O_3$

(0<y<1).

The internal electrodes 121 and 122 may include a first internal electrode 121 and a second internal electrode 122 alternately disposed in the first direction, with the dielectric layer 111 therebetween. The first internal electrode 121 and the second internal electrode 122 may be electrically isolated from each other by the dielectric layer 111 interposed therebetween.

The first internal electrode 121 may be disposed to be exposed from the third surface 3, spaced apart from the fourth surface 4 and extending to fifth and sixth surfaces 5 and 6. The second internal electrode 122 may be disposed to be exposed from the fourth surface 4, spaced apart from the third surface 3, and extending to the fifth and sixth surfaces 5 and 6.

A conductive metal, included in the internal electrodes 121 and 122, may be one or more of Ni, Cu, Pd, Ag, Au, Pt, Sn, W, Ti, and alloys thereof, and may be more preferably Ni, but the present disclosure is not limited thereto.

The body 110 may include a capacitance formation portion Ac including the dielectric layer 111 and the internal electrodes 121 and 122 disposed alternately with the dielectric layer 111 in the first direction, and cover portions 112 and 113 disposed on both surfaces of the capacitance formation portion Ac in the first direction. The capacitance formation portion Ac may be disposed within the body 110, and the first internal electrode 121 and the second internal electrode 122 may be alternately disposed, with the dielectric layer 111 interposed therebetween, to form capacitance of the multilayer electronic component 100.

The cover portions 112 and 113 may include a first cover portion 112 and a second cover portion 113 respectively disposed on both surfaces of the capacitance formation portion Ac opposing each other in the first direction, and the cover portions 112 and 113 may basically serve to prevent damage to an internal electrode caused by physical or chemical stress. The cover portions 112 and 113 may have a same configuration as that of the dielectric layer 111, except that an internal electrode is not included.

Side margin portions 141 and 142 may be disposed on the fifth surface 5 and the sixth surface 6 of the multilayer electronic component 100 according to an example embodiment of the present disclosure. Specifically, the multilayer electronic component 100 may include a first side margin portion 141 disposed on the fifth surface 5, and a second side margin portion 142 disposed on the sixth surface 6. The side margin portions 141 and 142 may serve to prevent damage to the internal electrodes 121 and 122 caused by physical or chemical stress. The side margin portions 141 and 142 may have a configuration similar to that of the dielectric layer 111, except that the internal electrodes 121 and 122 are not included. That is, the side margin portions 141 and 142 may include a perovskite-type compound, represented by $ABO_3$, as a main component.

The external electrodes 131 and 132 may be disposed on the third and fourth surfaces 3 and 4, and may be extended onto a portion of the first, second, fifth and sixth surfaces 1, 2, 5, and 6. The external electrodes 131 and 132 may include a first external electrode 131 connected to the first internal electrode 121, and a second external electrode 132 connected to the second internal electrode 122.

The external electrodes 131 and 132 may be disposed on the third and fourth surfaces 3 and 4 of the body 110, and may include a base electrode layer connected to the internal electrodes 121 and 122, and a plating layer disposed on the base electrode layer.

The base electrode layer may include a metal and a glass. The metal, included in the base electrode layer, may serve to secure electrical connectivity, and the glass, included in the base electrode layer, may serve to improve bonding strength with the body 110. The metal, included in the base electrode layer, may include Cu, Ni, Pd, Pt, Au, Ag, Pb, and/or an alloy including the same, but the present disclosure is not limited thereto.

The plating layer may improve mounting properties. A type of the plating layer is not particularly limited, and may be a plating layer including Ni, Sn, Pd, and/or an alloy including the same, and may be formed of a plurality of layers. The plating layer may be, for example, a Ni plating layer or a Sn plating layer, or may be a Ni plating layer and a Sn plating layer formed sequentially. In addition, the plating layer may include a plurality of Ni plating layers and/or a plurality of Sn plating layers.

Although the drawings illustrate a structure in which the multilayer electronic component 100 has two external electrodes 131 and 132, the present disclosure is not limited thereto, and the number or shapes of the external electrodes 131 and 132 may be changed depending on shapes of the internal electrodes 121 and 122 or other purposes.

According to an example embodiment of the present disclosure, when an average size of each of the cover portions 112 and 113 in the first direction is tc, $28 \, \mu m \leq tc \leq 34 \, \mu m$ may be satisfied. Here, the average size (tc) of each of the cover portions 112 and 113 in the first direction may refer to an average size of each of the first cover portion 112 and the second cover portion 113 in the first direction.

According to research, a critical force ($P_C$) at which chipping occurs may be proportional to $T \times h^{3/2}$ (T: Toughness of ceramic included in a body, h: A straight line distance from an external surface of a body to a capacitance formation portion). A small component having a size of 1005, having a relatively small h value, may be structurally vulnerable to a defect in which chipping occurs in an edge of the body 110. When chipping occurs, a plating solution or external moisture may permeate into the capacitance formation portion Ac, resulting in a reduction in reliability of the multilayer electronic component 100.

Conversely, in an example embodiment of the present disclosure, tc may satisfy 28 um or more, such that a distance for an external impact to reach the capacitance formation portion Ac may be increased, thereby preventing chipping or cracks from occurring in the body 110. In the case of a small component having a size of 1005 (0.75 mm ≤ L ≤ 1.25 mm and 0.25 mm ≤ W ≤ 0.75 mm), tc may be preferably 34 um or less in order to implement target capacitance of the multilayer electronic component 100.

According to an example embodiment of the present disclosure, when an average size of the dielectric layer 111 in the first direction is td, 0.4 um ≤ td ≤ 0.5 um may be satisfied. A maximum size (T) of the multilayer electronic component 100 in the first direction may be limited in order to implement miniaturization of the multilayer electronic component 100. When tc is 28 um or more within a limited T value, a size of the capacitance formation portion Ac in the first direction may be inevitably reduced, and accordingly the multilayer electronic component 100 may have reduced capacitance.

In the multilayer electronic component 100 according to an example embodiment of the present disclosure, td may satisfy 0.5 um or less, such that a thickness of the dielectric layer 111 may be reduced. As a result, even when the size of the capacitance formation portion Ac in the first direction is reduced, the target capacitance of the multilayer electronic component 100 may be implemented. When the thickness of the dielectric layer 111 is excessively reduced, a breakdown voltage of the multilayer electronic component 100 may be reduced, such that td may be preferably 0.4 um or more.

According to an example embodiment of the present disclosure, when an average size of each of the internal electrodes 121 and 122 in the first direction is te, $0.4 \ \mu m \leq te \leq 0.5 \ \mu m$ may be satisfied. As described above, the maximum size (T) of the multilayer electronic component 100 in the first direction may be limited in order to implement miniaturization of the multilayer electronic component 100. When tc is 28 um or more within a limited T value, the size of the capacitance formation portion Ac in the first direction may be reduced, such that the multilayer electronic component 100 may have reduced effective capacitance.

Conversely, in the multilayer electronic component 100 according to an example embodiment of the present disclosure, te may satisfy 0.5 um or less, such that a thickness of each of the internal electrodes 121 and 122 may be reduced. As a result, even when a size of the capacitance formation portion Ac in the first direction is reduced, the target capacitance of the multilayer electronic component 100 may be implemented. When the thickness of each of the internal electrodes 121 and 122 is excessively reduced, a breakdown voltage of the multilayer electronic component 100 may be reduced, such that td may be preferably 0.4 um or more.

In order to implement capacitance of the multilayer electronic component 100, the number of layers of internal electrodes 121 and 122 may be 400 layers or more, but the present disclosure is not limited thereto.

A thickness of each of the side margin portions 141 and 142 is not particularly limited. However, when an average size of each of the side margin portions 141 and 142 in the third direction is wm, 13 um ≤ wm ≤ 21 um may be satisfied. Here, the average size (wm) of each of the side margin portions 141 and 142 in the third direction may refer to an average size of each of the first side margin portion 141 and the second side margin portion 142 in the third direction.

As described above, a small component having a size of 1005 may be vulnerable to chipping defects, such that wm may be preferably 13 um or more. As a result, a distance for an external impact to reach the capacitance formation portion Ac may be increased, thereby suppressing occurrence of chipping defects. A small component having a size of 1005, wm may be preferably 21 um or less in order to implement the target capacitance of the multilayer electronic component 100.

In the related art, a side margin portion may have a thickness greatly varying depending on a position. Specifically, in the related art, a thickness of a first or second side margin portion corresponding to a central region of a body in a first direction may be formed to be greater than thicknesses of other portions. As described, when the side margin portion has a thickness greatly varying depending on a position, a portion occupied by a side margin portion of a multilayer electronic component having the same size may increase, such that a large size of a capacitance formation portion may not be secured, resulting in a reduction in capacitance per unit volume of the multilayer electronic component. In particular, the multilayer electronic component 100 according to an example embodiment of the present disclosure, a small component having a size of 1005, may be designed to secure maximum capacitance per unit volume.

Conversely, in the multilayer electronic component 100 according to an example embodiment of the present disclosure, as will be described below, the side margin portions 141 and 142 may be formed by bringing a side margin portion sheet into close contact with both surfaces of the body in the third direction and pressing the resulting structure, such that a variation in thickness of each of the side margin portions 141 and 142 depending on a position may be less than that of the side margin portion according to the related art. For example, a ratio (w2/w1) of a size (w2) of the first side margin portion 141 or the second side margin portion 142 in the third direction in contact with an end of an outermost internal electrode 121 or 122 in the first direction to a size (w1) of the first side margin portion 141 or the second side margin portion 142 in the third direction corresponding to a central region of the body 110 in the first direction may satisfy 0.9 or more and 1.0 or less. When w2/w1 satisfies the above-described range, a size of each of the side margin portions 141 and 142 in the third direction may be reduced, thereby improving capacitance per unit volume of the multilayer electronic component 100.

In addition, as the size of each of the side margin portions 141 and 142 in the third direction is reduced, a ratio (tc/wm) of tc to wm may be 2 or more. An upper limit of tc/wm is not particularly limited, but may be, for example, 2.25 or less.

A maximum size (T) of a multilayer electronic component, having a size of 1005 (length: 1.0 mm ± 0.25 mm, width: 0.5 mm ± 0.25 mm), in the first direction according to the related art may be similar to a maximum size (W) of the multilayer electronic component in the third direction. Alternatively, the number of internal electrodes may be increased to implement target capacitance, such that the maximum size (T) of the multilayer electronic component in the first direction may be greater than the maximum size (W) of the multilayer electronic component in the third direction.

When T is less than W, it may be advantageous in terms of miniaturization, as compared to a case in which T is similar to or greater than W according to the related art, but may be disadvantageous in terms of preventing chipping defects and securing effective capacitance. Conversely, according to an example embodiment of the present disclosure, $28 \ \mu m \leq tc \leq 34 \ \mu m$, $0.4 \ um \leq td \leq 0.5 \ um$, and/or $0.4 \ \mu m \leq te \leq 0.5 \ um$ may be satisfied, thereby preventing chipping defects and securing capacitance of the multilayer electronic component 100, even when T is less than W. Accordingly, in an example embodiment of the present disclosure, T < W may be satisfied in order to miniaturize the multilayer electronic component 100. More specifically, T may satisfy T < 0.5 mm. According to an example embodiment of the present disclosure, even when T is less than 0.5 mm, the multilayer electronic component 100 may have a capacitance of 12 $\mu$F or more.

More preferably, L may satisfy $1.0 \ mm \leq L \leq 1.15$ mm, W may satisfy $0.55 \ mm < W \leq 0.65$ mm, and T may satisfy $0.46 \ mm \leq T < 0.5$ mm. A ratio (T/W) of T to W may be 0.70 or more and less than 0.85 in consideration of effective capacitance or a manufacturing process of the multilayer electronic component 100, but the present disclosure is not limited thereto.

In order to prevent chipping defects and implement capacitance of the multilayer electronic component 100, a ratio (tc/T) of tc to T may satisfy $0.056 \leq tc/T \leq 0.67$, and a ratio (wm/T) of wm to T may satisfy $0.028 \leq wm/T \leq 0.38$.

In an example embodiment, when an average distance in the second direction between the third surface 3 and the second internal electrode 122 is L1, $30 \ um \leq L1 \leq 50 \ um$ may be satisfied. In the case of a small component having a size of 1005, when L1 is less than 30 um, it may be difficult to stably secure insulation between the second internal electrode 122 and the first external electrode 131. When L1 is greater than 50 $\mu$m, an area of the capacitance formation portion Ac may be reduced, making it difficult to implement the target capacitance of the multilayer electronic component 100.

When an average distance in the second direction between the fourth surface 4 and the first internal electrode 121 is L2, $30 \ \mu m \leq L2 \leq 50 \ um$ may be satisfied.

Hereinafter, an example of a method for measuring tc, td, te, L1, L2, and wm will be described.

First, the average size (tc) of each of the cover portions 112 and 113 in the first direction may be measured by scanning, with the SEM, a cross-section of the body 110 in the first and second directions. For example, tc may be measured by measuring sizes of each of the cover portions 112 and 113 in the first direction at multiple points of each of the cover portions 112 and 113, for example, five points equally spaced apart from each other in the second direction, and then calculating an average of the sizes in the first direction.

An average size (td) of the dielectric layer 111 in the first direction and an average size (te) of each of the internal electrodes 121 and 122 in the first direction may be measured, for example, by scanning, with the SEM, the cross-section of the body 110 in the first and second directions at a magnification of 10,000. More specifically, td may be measured by measuring sizes of one dielectric layer 111 in the first direction at multiple points of the dielectric layer 111, for example, thirty points equally spaced apart from each other in the second direction, and calculating an average of the sizes in the first direction. te may be measured by measuring sizes of each of the internal electrodes 121 and 122 in the first direction at multiple points of each of the internal electrodes 121 and 122, for example, thirty points equally spaced apart from each other in the second direction, and calculating an average of the sizes in the first direction. The thirty points, equally spaced apart from each other, may be designated in the capacitance formation portion Ac. In addition, when such average value measurement is performed on ten dielectric layers 111 and ten internal electrodes 121 and 122, td and te may be further generalized.

An average distance L1 in the second direction between the third surface 3 and the second internal electrode 122 may be measured, for example, by scanning, with the SEM, the cross-section of the body 110 in the first and second directions, and then measuring a distance in the second direction between ten or more second internal electrodes 122 and the third surface 3 that are five layers or more apart from each other, and then calculating an average value thereof. In the same manner, an average distance L2 in the second direction between the fourth surface 4 and the first internal electrode 121 may be measured, for example, by scanning, with the SEM, the cross-section of the body 110 in the first and second directions, and then measuring a distance in the second direction between ten or more first internal electrodes 121 and the fourth surface 4 that are five layers or more apart from each other, and then calculating an average value thereof.

For example, the average size (wm) of each of the side margin portions 141 and 142 in the third direction may be measured by scanning, with the SEM, a cross-section of the multilayer electronic component 100 in the first and third directions passing through the center of the body 110 in the second direction, measuring sizes of each of the side margin portions 141 and 142 in the third direction at multiple points of each of the side margin portions 141 and 142, for example, five points equally spaced apart from each other in the first direction, and then calculating an average of the sizes in the third direction.

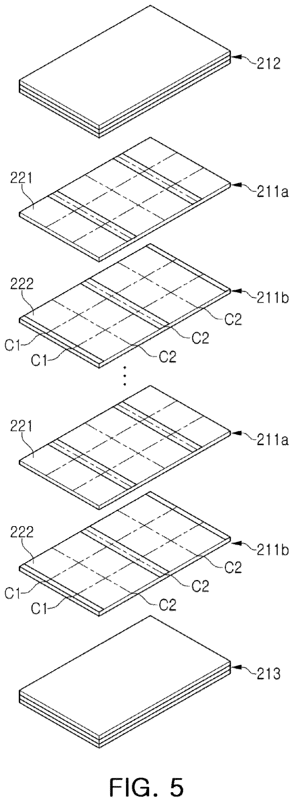

FIGS. 5 to 7 are schematic perspective views of a method of manufacturing a multilayer electronic component according to an example embodiment of the present disclosure. Hereinafter, an example of a method of manufacturing the above-described multilayer electronic component 100 will be described with reference to FIGS. 5 to 7.

A ceramic slurry including ceramic powder particles, an organic solvent, and a binder may be prepared, and the slurry may be coated and dried on a carrier film to prepare a ceramic green sheet. The ceramic powder particles are not particularly limited as long as sufficient capacitance is obtainable therewith. For example, a barium titanate-based material, a lead composite perovskite-based material, or a strontium titanate-based material may be used for the ceramic powder particles. Examples of the ceramic powder particles may include $(Ba_{1-x}Ca_x)TiO_3$ (0<x<1), $Ba(Ti_{1-y}Ca_y)O_3$ (0<y<1), $(Ba_{1-x}Ca_x)(Ti_{1-y}Zr_y)O_3$ (0<x<1, 0<y<1), or $Ba(Ti_{1-y}Zr_y)O_3$ (0<y<1) obtained by partially dissolving Ca or Zr in $BaTiO_3$.

Subsequently, as illustrated in FIG. 5, a first ceramic green sheet 211a and a second ceramic green sheet 211b for forming a capacitance formation portion Ac, and a first cover portion sheet 212 and a second cover portion sheet 213 for forming cover portions 112 and 113 may be laminated to manufacture a ceramic laminate.

A first internal electrode pattern 221 for forming a first internal electrode 121 may be formed on the first ceramic green sheet 211a, and a second internal electrode pattern 222 for forming a second internal electrode 122 may be formed on the second ceramic green sheet 211b. Specifically, a plurality of first internal electrode patterns 221, disposed at predetermined intervals, may be formed on the first ceramic green sheet 211a. The plurality of first internal electrode patterns 221 have a strip shape, and may be formed to be parallel to each other. In addition, a plurality of second internal electrode patterns 222, disposed at predetermined intervals, may be formed on the second ceramic green sheet 211b. The plurality of second internal electrode patterns 222 may have a strip shape, and may be formed to be parallel to each other. The internal electrode patterns 221 and 222 may be formed by printing a conductive paste for an internal electrode including metal powder particles, a binder, a solvent, and the like, using a screen-printing method, a gravure-printing method, or the like.

The cover portion sheets 212 and 213 may have a configuration similar to that of a ceramic green sheet 211. However, no internal electrode pattern may be formed on the cover portion sheets 212 and 213.

Subsequently, the manufactured ceramic laminate may be compressed and then cut along cutting lines C1 and C2. Specifically, the ceramic laminate may be cut along a plurality of first cutting lines C1 parallel to a second direction, and a plurality of second cutting lines C2 parallel to a third direction. The cutting lines C1 and C2 may cross the first internal electrode pattern 221 and the second internal electrode pattern 222.

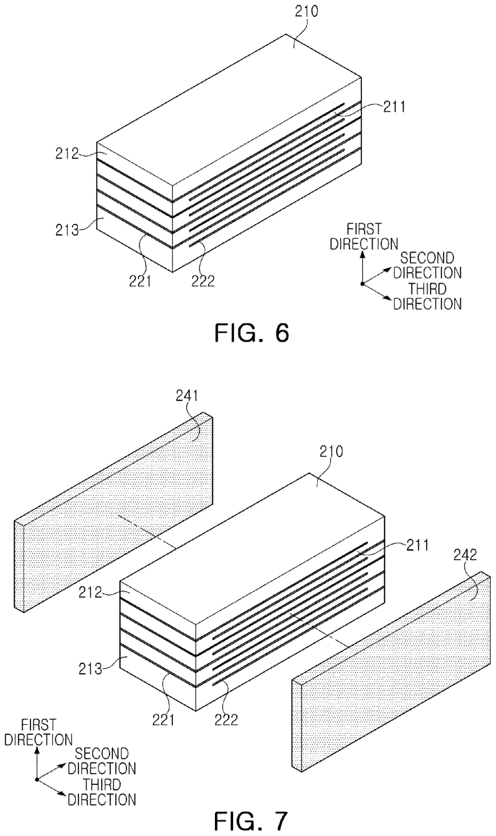

As a result, a ceramic chip 210, illustrated in FIG. 6, may be manufactured. The ceramic chips 210 may be alternately disposed with the ceramic green sheet 211 having the cut first and second internal electrode patterns 221 and 222 interposed therebetween.

Subsequently, side margin portion sheets 241 and 242 for forming side margin portions 141 and 142 may be pressed and brought into contact with both surfaces of a multilayer chip 210 in the third direction. Thereafter, the multilayer chip 210 to which the side margin portion sheets 241 and 242 are attached may be sintered to form a body 110 and side margin portions 141 and 142. A sintering temperature is not particularly limited. For example, sintering may be performed at a temperature of 1100°C or higher and 1300°C or lower. In addition, before the multilayer chip 210 is sintered, a binder removal process, a barrel polishing process, or the like may be performed, as necessary.

Subsequently, external electrodes 131 and 132 may be formed. First, the body 110 on which the side margin portions 141 and 142 are formed may be dipped in a conductive paste including metal powder particles and a glass, and then sintered to form a base electrode layer. Thereafter, a plating layer may be formed on the base electrode layer. A method of forming a plating layer is not particularly limited. For example, an electrolytic plating method and/or an electroless plating method may be used.

However, the above-described manufacturing method is an example, and a method of manufacturing the multilayer electronic component 100 is not limited to the above-described manufacturing method.

While example embodiments have been illustrated and described above, it will be apparent to those skilled in the art that modifications and variations could be made without departing from the scope of the present disclosure as defined by the appended claims.

In addition, the term "an example embodiment" used herein does not refer to the same example embodiment, and is provided to emphasize a particular feature or characteristic different from that of another example embodiment. However, example embodiments provided herein are considered to be able to be implemented by being combined in whole or in part one with one another. For example, one element described in a particular example embodiment, even if it is not described in another example embodiment, may be understood as a description related to another example embodiment, unless an opposite or contradictory description is provided therein.

As used herein, the terms "first," "second," and the like may be used to distinguish a component from another component, and may not limit a sequence and/or an importance, or others, in relation to the components. In some cases, a first component may be referred to as a second component, and similarly, a second component may be referred to as a first component without departing from the scope of the example embodiments.

While example embodiments have been shown and described above, it will be apparent to those skilled in the art that modifications and variations could be made without departing from the scope of the present disclosure as defined by the appended claims.

## Claims

1. A multilayer electronic component comprising:

    a body having a first surface and a second surface opposing each other in a first direction, a third surface and a fourth surface connected to the first surface and the second surface and opposing each other in a second direction, and a fifth surface and a sixth surface connected to the first to fourth surfaces and opposing each other in a third direction, the body including a capacitance formation portion including a dielectric layer and an internal electrode disposed alternately with the dielectric layer in the first direction, and a cover portion disposed on both surfaces of the capacitance formation portion in the first direction; and
    an external electrode disposed on the third surface and the fourth surface,
    wherein, when a maximum size of the multilayer electronic component in the second direction is L, a maximum size of the multilayer electronic component in the third direction is W, a maximum size of the multilayer electronic component in the first direction is T, an average size of the cover portion in the first direction is tc, an average size of the dielectric layer in the first direction is td, and an average size of the internal electrode in the first direction is te, $0.75 \text{ mm} \leq L \leq 1.25 \text{ mm}$, $0.25 \text{ mm} \leq W \leq 0.75 \text{ mm}$, $T < 0.5 \text{ mm}$, $28 \text{ um} \leq tc \leq 34 \text{ }\mu\text{m}$, $0.4 \text{ um} \leq td \leq 0.5 \text{ um}$, and $0.4 \text{ um} \leq te \leq 0.5 \text{ um}$ are satisfied.

2. The multilayer electronic component of claim 1, wherein $T < W$ is satisfied.

3. The multilayer electronic component of claim 1, wherein

    the internal electrode includes a first internal electrode and a second internal electrode alternately disposed in the first direction with the dielectric layer interposed therebetween,
    the first internal electrode is disposed to be exposed from the third surface and extending to the fifth surface and the sixth surface,
    the second internal electrode is disposed to be exposed from the fourth surface and extending to the fifth surface and the sixth surface, and
    a side margin portion is disposed on the fifth surface and the sixth surface.

4. The multilayer electronic component of claim 3, wherein, when an average size of the side margin portion in the third direction is wm, $13 \text{ um} \leq wm \leq 21 \text{ um}$ is satisfied.

5. The multilayer electronic component of claim 1, wherein

    the internal electrode includes a first internal electrode and a second internal electrode alternately disposed in the first direction with the dielectric layer interposed therebetween,
    the first internal electrode is disposed to be exposed from third surface and spaced apart from the fourth surface, and the second internal electrode is disposed to be exposed from the fourth surface and spaced apart from the third surface, and
    when an average distance in the second direction between the third surface and the second internal electrode is L1, $30 \text{ }\mu\text{m} \leq L1 \leq 50 \text{ um}$ is satisfied.

6. The multilayer electronic component of claim 1, wherein a capacitance of the multilayer electronic component is $12 \text{ }\mu\text{F}$ or more.

7. The multilayer electronic component of claim 4, wherein a ratio of a minimum size of the side margin portion in the width direction to a maximum size of the side margin portion in the width direction is in a range from 0.9 to 1.0.

8. The multilayer electronic component of claim 3, wherein a ratio (tc/wm) of average size (tc) of the cover portion in the thickness direction to average size (wm) of the side margin portion in the width direction is in a range from 2.0 to 2.25.

9. The multilayer electronic component of claim 1, wherein $0.056 \leq tc/T \leq 0.67$ is satisfied.

10. The multilayer electronic component of claim 4, wherein $0.028 \leq wm/T \leq 0.38$ is satisfied.

11. The multilayer electronic component of claim 2, wherein $0.70 \leq T/W < 0.85$ is satisfied.

**12.** A multilayer electronic component comprising:

a body including a capacitance formation portion including a dielectric layer and internal electrodes disposed alternately with the dielectric layer in a thickness direction, and a cover portion disposed on opposing surfaces of the capacitance formation portion in the thickness direction;
side margin portions disposed on width-wise opposing surfaces; and
external electrodes disposed on length-wise opposing surfaces,
wherein a thickness T of the multilayer electronic component, an average size of the cover portion in the thickness direction tc, and an average size of the side margin portion in the width direction wm satisfying the following relationships:

$$0.056 \leq tc/T \leq 0.67,$$

and

$$0.028 \leq wm/T \leq 0.38.$$

**13.** The multilayer electronic component of claim 12, wherein T less than 0.5 mm, and
a ratio of a minimum size of the side margin portion in the width direction to a maximum size of the side margin portion in the width direction is in a range from 0.9 to 1.0.

**14.** The multilayer electronic component of claim 12, wherein tc/wm is in a range from 2.0 to 2.25.

**15.** The multilayer electronic component of claim 12, wherein length L of the multilayer electronic component satisfies $0.75 \text{ mm} \leq L \leq 1.25 \text{ mm}$, width W of the multilayer electronic component satisfies $0.25 \text{ mm} \leq W \leq 0.75 \text{ mm}$, and the average thickness of the cover portion in the thickness direction satisfies $28 \text{ um} \leq tc \leq 34 \text{ } \mu\text{m}$.

100

132

141

110

142

131

II

I'

II'

I

T

L

W

FIRST
DIRECTION

SECOND
DIRECTION

THIRD
DIRECTION

FIG. 1

FIRST
DIRECTION
SECOND
DIRECTION
THIRD
DIRECTION

FIG. 2

111   110   112   121   122

131

T

tc

132

td
te

L1

113   Ac

L2

L

FIRST
DIRECTION

SECOND
DIRECTION

I-I'

FIG. 3

111   112   121   122

141

w2

142

w1

Ac

wm   113

FIRST
DIRECTION

THIRD
DIRECTION

II-II'

FIG. 4

FIG. 5

FIG. 6

FIG. 7

Europäisches
Patentamt

European
Patent Office

Office européen
des brevets

# EUROPEAN SEARCH REPORT

Application Number

EP 24 19 5892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/043869 A1 (NAKAMURA TOMOAKI [JP] ET AL) 9 February 2023 (2023-02-09) * paragraphs [0023] - [0029]; figure 1 * | 1-15 | INV. H01G4/30 H01G4/12 H01G4/224 |
| X | US 2016/293331 A1 (KITAMURA SHOHEI [JP] ET AL) 6 October 2016 (2016-10-06) | 1,12 | ADD. H01G4/012 |
| A | * paragraphs [0061] - [0067], [0080], [0081] * | 2-11, 13-15 | |
| X | JP 2017 118083 A (TAIYO YUDEN KK) 29 June 2017 (2017-06-29) | 1,12 | |
| A | * paragraph [0070] * | 2-11, 13-15 | |
| A | US 2019/371528 A1 (TAKASHIMA KENJI [JP]) 5 December 2019 (2019-12-05) * paragraphs [0022], [0035], [0060] * | 1-15 | |
| A | JP 2018 148226 A (TAIYO YUDEN KK) 20 September 2018 (2018-09-20) * paragraphs [0027], [0072] * | 1-15 | TECHNICAL FIELDS SEARCHED (IPC) H01G |

The present search report has been drawn up for all claims

| Place of search | Date of completion of the search | Examiner |
|---|---|---|
| Munich | 31 January 2025 | El-Sayed, Tassem |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 5892

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| US 2023043869 A1 | 09-02-2023 | JP | 2023018852 A | 09-02-2023 |
| | | US | 2023043869 A1 | 09-02-2023 |
| US 2016293331 A1 | 06-10-2016 | JP | 6632808 B2 | 22-01-2020 |
| | | JP | 2016189423 A | 04-11-2016 |
| | | US | 2016293331 A1 | 06-10-2016 |
| | | US | 2018190432 A1 | 05-07-2018 |
| | | US | 2021233711 A1 | 29-07-2021 |
| JP 2017118083 A | 29-06-2017 | JP | 6436921 B2 | 12-12-2018 |
| | | JP | 2017118083 A | 29-06-2017 |
| | | JP | 2019050410 A | 28-03-2019 |
| | | KR | 20180089890 A | 09-08-2018 |
| | | PH | 12016000122 A1 | 09-10-2017 |
| US 2019371528 A1 | 05-12-2019 | JP | 7241472 B2 | 17-03-2023 |
| | | JP | 7580513 B2 | 11-11-2024 |
| | | JP | 2019212716 A | 12-12-2019 |
| | | JP | 2023060234 A | 27-04-2023 |
| | | US | 2019371528 A1 | 05-12-2019 |
| JP 2018148226 A | 20-09-2018 | JP | 6346910 B2 | 20-06-2018 |
| | | JP | 2016225603 A | 28-12-2016 |
| | | JP | 2018148226 A | 20-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230132660